Europäisches Patentamt

European Patent Office

Office européen des brevets

(19)

(11) Veröffentlichungsnummer: **0 092 042**
**B1**

(12) **EUROPÄISCHE PATENTSCHRIFT**

(45) Veröffentlichungstag der Patentschrift:
16.09.87

(51) Int. Cl.⁴: **G 01 K 17/16**

(21) Anmeldenummer: 83101819.7

(22) Anmeldetag: **24.02.83**

(54) **Wärmemengenzähler.**

(30) Priorität: **09.03.82 DE 3208511**

(43) Veröffentlichungstag der Anmeldung:
**26.10.83 Patentblatt 83/43**

(45) Bekanntmachung des Hinweises auf die Patenterteilung:
**16.09.87 Patentblatt 87/38**

(84) Benannte Vertragsstaaten:
**AT DE NL SE**

(56) Entgegenhaltungen:
**DE - A - 2 316 718
DE - A - 2 542 025
FR - A - 2 292 964**

(73) Patentinhaber: **Siemens Aktiengesellschaft Berlin und München, Wittelsbacherplatz 2, D-8000 München 2 (DE)**

(72) Erfinder: **Kühnlein, Hans, Zinkenwerder Strasse 2, D-8500 Nürnberg-Grossgründlach (DE)**
Erfinder: **Stark, Reinhard, Wodanstrasse 20, D-8500 Nürnberg (DE)**

## Beschreibung

Die Erfindung betrifft einen Wärmemengenzähler gemäss dem ersten Teil des Patentanspruchs 1.

Ein solcher Wärmemengenzähler ist aus der DE-A-2 542 025 bekannt.

Bei im Handel verfügbaren Wärmemengenzählern werden zur Erfassung der Strömungsgeschwindigkeit häufig mechanische Strömungsgeschwindigkeitsmesseinrichtungen, beispielsweise Flügelradanemometer, eingesetzt, die die für den Messvorgang benötigte Energie aus der kinetischen Energie des strömenden fluidischen Mediums entnehmen. Solche mechanischen Strömungsgeschwindigkeitsmesseinrichtungen weisen eine Reihe von Nachteilen auf. So laufen sie beispielsweise bei nur geringen Strömungsgeschwindigkeiten aufgrund der Lagerreibung häufig nicht an, so dass eine Messwerterfassung unmöglich wird. Darüber hinaus sind solche mechanischen Strömungsgeschwindigkeitsmesseinrichtungen korrosionsanfällig und benötigen ein nicht unerhebliches Einbauvolumen und einen beträchtlichen Fertigungs- und Montageaufwand. Es existieren nichtmechanische Strömungsgeschwindigkeitsmesseinrichtungen, die von diesen Nachteilen frei sind. Allerdings sind diese nicht in der Lage, die für den Messvorgang benötigte Energie aus der kinetischen Energie des fluidischen Mediums zu entnehmen. Vielmehr benötigen sie die Zufuhr elektrischer Energie. Solche nichtmechanischen Strömungsgeschwindigkeitsmesseinrichtungen basieren beispielsweise auf akustischen Durchflussmessverfahren, magnetisch-induktiven Messverfahren oder thermischen Messverfahren. Diese Messverfahren sind beispielsweise in der Zeitschrift «Technisches Messen tm» 1979, Heft 4, Seiten 145, 146 und 148 näher beschrieben.

Da Wärmemengenzähler fälschungssicher ausgebildet sein müssen und zur Verringerung des Installationsaufwandes ohne Netzanschluss betrieben werden sollen, werden sie üblicherweise von einer Batterie gespeist, die sich in einem plombierten Gehäuse befindet. Bei hohem Energieverbrauch ist ein häufiger Batteriewechsel erforderlich.

Der Erfindung liegt die Aufgabe zugrunde, einen Wärmemengenzähler der eingangs genannten Art so zu verbessern, dass bei Einsatz von nichtmechanischen Strömungsgeschwindigkeitsmesseinrichtungen der Verbrauch an elektrischer Energie verringert werden kann.

Die Aufgabe wird erfindungsgemäss dadurch gelöst, dass die eingangs genannte Strömungsgeschwindigkeitsmesseinrichtung nur in bestimmten Zeitpunkten aktiviert wird, wobei die Häufigkeit dieser Messzeitpunkte etwa proportional zu einer Hilfsgrösse festgelegt ist, die ein Mass für die Erheblichkeit einer möglichen Änderung eines die Wärmeleistungen bestimmenden Parameters auf das Messergebnis ist und dass ein zweiter Multiplizierer dem Quantisierer vorgeschaltet ist, in dem das Ausgangssignal des ersten Multiplizierers mit einem dem zeitlichen Abstand zwischen zwei Messschaltpunkten proportionalen Wert multipliziert wird.

Dadurch, dass die Strömungsgeschwindigkeitsmesseinrichtung nicht mehr kontinuierlich im Betrieb ist, sondern nur noch zu bestimmten Messzeitpunkten zur Durchführung einer Messung aktiviert wird, wird nur noch zu den Messzeitpunkten und für die konstante Dauer einer Messung von der Strömungsgeschwindigkeitsmesseinrichtung elektrische Energie benötigt. Damit wird die elektrische Energiequelle des Wärmemengenzählers gegenüber einem Wärmemengenzähler mit kontinuierlich im Betrieb befindlicher Strömungsgeschwindigkeitsmesseinrichtung erheblich entlastet. Würde die Strömungsgeschwindigkeitsmesseinrichtung jeweils zu durch ein konstantes Zeitintervall getrennten Messzeitpunkten aktiviert, dann müsste eine so hohe Häufigkeit dieser Messzeitpunkte gewählt werden, dass auch die schnellstmöglichen Änderungen der Wärmeleistung gerade noch erfasst werden könnten. Da solche schnellen Änderungen der Wärmeleistung nur verhältnismässig selten auftreten, wäre ein solcher Wärmemengenzähler für die üblicherweise auftretenden vergleichsweise langsamen Änderungen der Wärmeleistung bezüglich der Häufigkeit der Messzeitpunkte überdimensioniert, so dass immer noch ein vergleichsweise hoher Verbrauch an elektrischer Energie zum Betrieb der Strömungsgeschwindigkeitsmesseinrichtung aufträte.

Die vorliegende Erfindung gründet sich auf die Erkenntnis, dass eine weitere Entlastung der elektrischen Energiequelle des Wärmemengenzählers dann erreichbar ist, wenn die Häufigkeit der Messzeitpunkte nicht konstant ist, sondern nur dann hoch sein muss, wenn für das Messergebnis des Wärmemengenzählers relevante Änderungen mindestens eines die Wärmeleistung bestimmenden Parameters zu erwarten sind, wohingegen die Häufigkeit der Messzeitpunkte dann gering sein kann, wenn keine solchen messwertrelevanten Änderungen eines die Wärmeleistung bestimmenden Parameters zu erwarten sind. Die Häufigkeit der Messzeitpunkte wird vom Wert einer Hilfsgrösse abhängig gemacht. So kann beispielsweise die Häufigkeit der Messzeitpunkte etwa proportional zum zeitlichen Gradienten der Vorlauftemperatur gewählt sein. Ist dieser Gradient hoch, was immer dann der Fall ist, wenn die Vorlauftemperatur sich stark ändert, ändert sich die abgegebene Wärmeleistung stark, so dass dann – um Fehler im Messergebnis des Wärmemengenzählers zu vermeiden – die Strömungsmesseinrichtung sehr häufig in Betrieb genommen wird. Die Hilfsgrösse und die Häufigkeit der Messzeitpunkte wird auch dann einen erhöhten Wert annehmen, wenn beispielsweise eine die Strömungsgeschwindigkeit beeinflussende geregelte Umwälzpumpe in einem Heizungssystem entsprechend der geforderten Wärmeleistung nachgefahren wird. Dieser hohe Wert der Hilfsgrösse führt auch in diesem Fall zu einer hohen Häufigkeit der Messzeitpunkte. Da für ein präzises Messergebnis des Wärmemengenzählers auch die zwischen den Messzeitpunkten abgegebene Wärmeleistung zu berücksichtigen ist und diese Messzeitpunkte durch unterschiedlich lange Zeitintervalle voneinander getrennt sind, ist dem Quantisierer des Wärmemengenzählers ein zweiter Multiplizierer vorgeschaltet, in dem das der Wärmeleistung proportionale Ausgangssignal des ersten Multiplizierers mit dem durch den Wert der Hilfsgrösse bestimmten zeitlichen Abstand zum nächsten Messzeitpunkt proportionalen Wert multipliziert wird. Damit werden Fehler im Messergebnis des Wärmemengenzählers durch die unterschiedliche Häufigkeit der Messzeitpunkte ausgeschlossen.

Als Hilfsgrösse kann ein etwa wärmeleistungsproportionales Signal dienen. Als solches Signal kann der Mittelwert aus Vor- und Rücklauftemperatur dienen. Da eine niedrige momentan abgegebene Wärmeleistung vergleichsweise wenig zu der vom Wärmemengenzähler erfassten abgegebenen Gesamtwärmemenge beiträgt, kann in diesem Fall ohne erhebliche Beeinträchtigung des Messergebnisses die mit dem niedrigen Wert der Hilfsgrösse korrelierte geringe Häufigkeit der Messzeitpunkte in Kauf genommen werden. Bei einer hohen momentan abgegebenen Wärmeleistung steigt die Hilfsgrösse an und damit auch die Häufigkeit der Messzeitpunkte für die Strömungsgeschwindigkeitsmesseinrichtung.

Für diesen Fall ist eine Summiereinrichtung für die Ausgangssignale der dem Heizungsvorlauf und dem Heizungsrücklauf zugeordneten Temperatursensoren vorgesehen, deren Ausgangssignal als Hilfsgrösse dient. Da zum Betrieb eines Wärmemengenzählers ohnehin Temperatursensoren für den Heizungsvorlauf und den Heizungsrücklauf vorgesehen werden müssen, kann somit die Hilfsgrösse mit nur geringem technischen Aufwand gewonnen werden.

Eine bevorzugte Ausführungsform besteht darin, dass das Ausgangssignal der Summiereinrichtung einerseits einem weiteren Quantisierer zur Bildung eines Impulszuges mit der Grösse des Ausgangssignals der Summiereinrichtung proportionaler Frequenz und andererseits dem zweiten Eingang des zweiten Multiplizierers, dessen erster Eingang mit dem Ausgang des ersten Multiplizierers verbunden ist, zugeführt ist und dass der Impulszug an den Triggereingang der Strömungsgeschwindigkeitsmesseinrichtung geführt ist. Damit wird die dem Ausgangssignal der Summiereinrichtung proportionale Hilfsgrösse in einen Impulszug umgesetzt, dessen Frequenz der Hilfsgrösse proportional ist. Jeder Impuls des Impulszuges aktiviert die triggerbar ausgeführte Strömungsgeschwindigkeitsmesseinrichtung zur Durchführung einer Strömungsgeschwindigkeitsmessung. Das strömungsgeschwindigkeitsproportionale Ausgangssignal der Strömungsgeschwindigkeitsmesseinrichtung wird zusammen mit der Vorlauf- Rücklauf-Temperaturdifferenz im ersten Multiplizierer zu einem der aktuellen Wärmeleistung proportionalen Signal verknüpft. Darüber hinaus wird das als Hilfsgrösse genutzte Ausgangssignal der Summiereinrichtung in einem weiteren, dem ersten Multiplizierer nachgeschalteten zweiten Multiplizierer zur Berücksichtigung der im allgemeinen unterschiedlich langen Zeitspanne zwischen zwei Messzeitpunkten zugeführt. Dies bedeutet angesichts der kostengünstigen Verfügbarkeit von als integrierten Bausteinen zur Verfügung stehenden Multiplizierern und Quantisierern nur einen geringen Mehraufwand.

Der Summiereinrichtung kann ein eine Verknüpfung bewirkendes Operationsglied unmittelbar nachgeschaltet sein, dessen einem Eingang das Ausgangssignal der Summiereinrichtung und dessen anderem Eingang das Ausgangssignal eines Zufallsgenerators zugeführt ist, wobei der Zufallsgenerator einen nach oben begrenzten Wertevorrat aufweist. Als Operationsglied kann ein dritter Multiplizierer oder eine weitere Summiereinrichtung dienen. Bei einem auf Analogbasis arbeitenden dritten Multiplizierer oder einer so arbeitenden weiteren Summiereinrichtung ist es erforderlich, das üblicherweise digital zur Verfügung stehende Ausgangssignal des Zufallsgenerators vor der Verarbeitung im Multiplizierer zu analogisieren. Dies ist jedoch nicht erforderlich, wenn als Zufallsgenerator ein Rauschgenerator dient, da dessen Ausgangssignal als analoge Grösse anfällt. Dieser Zufallsgenerator bringt eine unkalkulierbare Verschiebung der Messzeitpunkte ins Spiel, so dass selbst dann, wenn die aufgrund der Hilfsgrösse allein ermittelten Messzeitpunkte einem fälschungswilligen Betreiber des Wärmemengenzählers bekannt wären, eine Manipulation des Wärmemengenzählers unmöglich gemacht wird.

Jeder Quantisierer kann aus einem Integrator sowie einer nachgeschalteten Grenzwertstufe bestehen, deren Ausgang den Ausgang des Quantisierers bildet, wobei das Ausgangssignal der Grenzwertstufe zur Zurücksetzung des Integrators genutzt ist. Damit kann in kostengünstiger Weise am Ausgang des Quantisierers ein Impulszug abgenommen werden, dessen Frequenz dem Eingangssignal proportional ist.

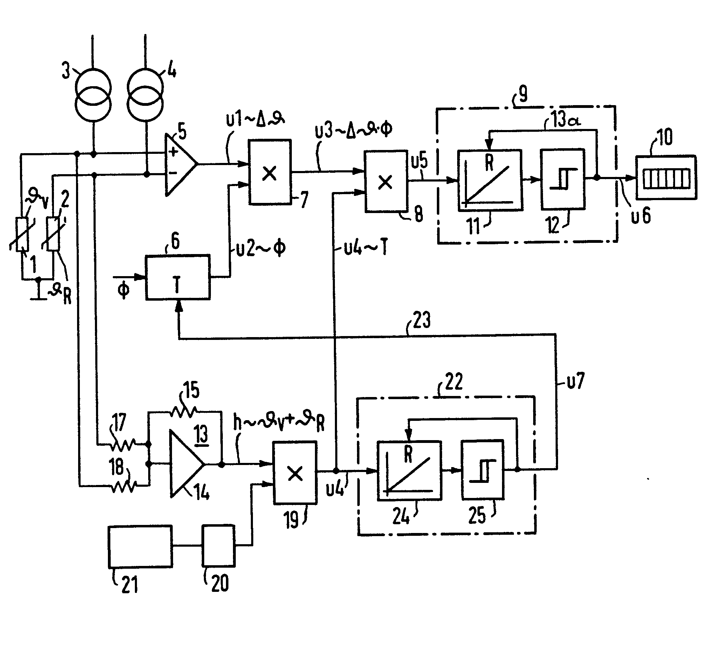

Die Erfindung wird im folgenden anhand eines in der Figur dargestellten Ausführungsbeispiels näher erläutert.

Der in der Figur dargestellte Wärmemengenzähler weist zwei temperaturempfindliche Widerstände 1 und 2 auf, wobei der erstere der Erfassung der Vorlauftemperatur $\vartheta_V$, der letztere der Erfassung der Rücklauftemperatur $\vartheta_R$ dient. Soll durch den Wärmemengenzähler lediglich die von einem Wärmetauscher abgegebene Wärmemenge erfasst werden, dann sind die beiden temperaturempfindlichen Widerstände 1 und 2 in direkten thermischen Kontakt mit Heizungsvorlauf bzw. Heizungsrücklauf dieses Wärmetauschers zu bringen. Soll dagegen durch den Wärmemengenzähler die durch eine Vielzahl von Wärmetauschern in einer Gebäudeeinheit abgegebene Wärmemenge erfasst werden, dann sind die temperaturempfindlichen Widerstände 1 und 2 in thermischen Kontakt mit der Vorlauf- bzw. Rücklaufsammelleitung zu bringen. Der temperaturempfindliche Widerstand 1 wird durch eine Konstantstromquelle 3, der temperaturempfindliche Widerstand 2 durch eine Konstantstromquelle 4 gespeist. Die an den temperaturempfindlichen Widerständen 1 und 2 auftretenden, der Vorlauftemperatur $\vartheta_V$ bzw. der Rücklauftemperatur $\vartheta_R$ proportionalen Spannungsabfälle sind den Eingängen + und − eines Differenzwertbildners 5 zugeführt, dessen Ausgangssignal u1 proportional zur Vorlauf-Rücklauf-Temperaturdifferenz $\Delta\vartheta = \vartheta_V - \vartheta_R$ ist.

Anstelle der temperaturempfindlichen Widerstände 1 und 2 können auch Thermoelemente verwendet werden, wobei in diesem Fall die Konstantstromquellen 3 und 4 entfallen.

Zur Erfassung der Strömungsgeschwindigkeit $\Phi$ des wärmetransportierenden fluidischen Mediums dient eine in die Heizungsvorlauf- bzw. Heizungsrücklaufleitung eingefügte Strömungsgeschwindigkeitsmesseinrichtung 6, die durch ein am Triggereingang T eingehendes impulsförmiges Signal für einen kurzzeitigen Messvorgang aktivierbar ist. Das der Strömungsgeschwindigkeit proportionale Ausgangssignal u2 der Strömungsgeschwindigkeitsmesseinrichtung 6 steht am einen Eingang eines Multiplizierers 7 an, dessen zweitem Eingang das der Vorlauf-Rücklauf-Temperaturdifferenz $\Delta\vartheta$ proportionale Signal u1 zugeführt ist. Der Multiplizierer 7 liefert ausgangsseitig ein dem Produkt aus Vorlauf-Rücklauf-Temperaturdifferenz $\Delta\vartheta$ und der Strömungsgeschwindigkeit $\Phi$ proportionales Signal u3, das der im aktuellen Messzeitpunkt abgegebenen Wärmeleistung entspricht.

Dieses Signal u3 steht am einen Eingang eines zweiten Multiplizierers 8 an, an dessen anderem Eingang ein die Häufigkeit der Messzeitpunkte der Strömungsgeschwindigkeitsmesseinrichtung 6 festlegendes Signal u4 geführt ist. Dieses Signal u4 dient der Berücksichtigung der unterschiedlich langen Zeitspannen zwischen den einzelnen Messzeitpunkten bei der Ermittlung des Messergebnisses des Wärmemengenzählers.

Die vom Wärmemengenzähler zu erfassende Wärmemenge Q lässt sich mathematisch darstellen als

$$Q = \sum_n T_n \cdot \Phi_n \cdot \Delta\vartheta_n \, ,$$

wobei $T_n$ die der Häufigkeit der Messzeitpunkte umgekehrt proportionale Zeitspanne zwischen dem Beginn zweier Messzeitpunkte für den n-ten Messzeitpunkt entspricht. $\Phi_n$ entspricht der im n-ten Messzeitpunkt gemessenen Strömungsgeschwindigkeit. $\Delta\vartheta_n$ entspricht der im n-ten Messzeitpunkt vorliegenden Vorlauf-Rücklauf-Temperaturdifferenz. Damit entspricht das Ausgangssignal u5 des Multiplizierers 8 einem Summenelement $T_n \cdot \Phi_n \cdot \Delta\vartheta_n$. Das Signal u5 ist dem Quantisierer 9 zugeführt, der ausgangsseitig einen Impulszug u6 liefert, dessen Frequenz der Grösse des Eingangssignals u5 proportional ist. Das Ausgangssignal u6 des Quantisierers 9 speist ein kumulierendes Zählwerk 10, in dem die Impulse des Impulszuges aufaddiert werden. Der Inhalt des kumulierenden Zählwerkes 10 gibt die gesamte bisher vom Wärmemengenzähler erfasste Wärmemenge dar und beinhaltet somit das Messergebnis des Wärmemengenzählers.

Der Quantisierer 9 weist eingangsseitig einen Integrator 11 auf, dessen Ausgangssignal einer Grenzwertstufe 12 zugeführt ist, deren Ausgang den Ausgang des Quantisierers bildet. Das Ausgangssignal der Grenzwertstufe 12 ist über die Leitung 13a dem Rücksetzeingang des Integrators 11 zugeführt. Solche Quantisierer sind aus der Technik elektronischer Elektrizitätszähler wohl bekannt.

Zur Festlegung der Messzeitpunkte, in denen die Strömungsgeschwindigkeitsmesseinrichtung 6 jeweils kurzzeitig für eine konstante Zeitspanne aktiviert wird, dient eine Hilfsgrösse h. Diese Hilfsgrösse h stellt ein Mass für die Erheblichkeit einer möglichen Änderung mindestens eines der die momentane Wärmeleistung bestimmenden Parameter für das Messergebnis des Wärmemengenzählers dar. Als Hilfsgrösse h dient im Fall des in der Figur dargestellten Ausführungsbeispiels ein etwa wärmeleistungsproportionales Signal, für das als einfach zu gewinnender Näherungswert die dem Mittelwert aus Vor- und Rücklauftemperatur $(\vartheta_V + \vartheta_R)/2$ gewählt ist. Da die Vorlauftemperatur $\vartheta_V$ und die Rücklauftemperatur $\vartheta_R$ ohnehin im Rahmen eines Wärmemengenzählers ermittelt werden, ist die genannte Summe ohne zusätzlichen Energieaufwand leicht zu erfassen. Dies geschieht durch die Summiereinrichtung 13. Die Summiereinrichtung 13 besteht aus einem Operationsverstärker 14 mit einem einen ohmschen Widerstand 15 enthaltenden Rückführungszweig. Über die Summationswiderstände 17 und 18 werden die an den temperaturempfindlichen Widerständen 1 und 2 abfallenden Spannungen an den Eingang des Operationsverstärkers 14 geführt. Das Ausgangssignal des Operationsverstärkers 14 stellt die Hilfsgrösse $h = \vartheta_V + \vartheta_R$ dar, die proportional der mittleren Wärmetauschertemperatur $(\vartheta_V + \vartheta_R)/2$ ist.

Diese Hilfsgrösse h ist dem Eingang eines dritten Multiplizierers 19 zugeführt, der als ein eine Verknüpfung seiner beiden Eingangssignale bewirkendes Operationsglied dient, dessen zweiter Eingang mit dem durch den Digital-Analog-Wandler 20 analogisierten Ausgangssignal eines Zufallsgenerators 21 beaufschlagt ist. Anstelle des dritten Multiplizierers 19 kann auch eine additive Verknüpfung der beiden Eingangssignale durch eine weitere Summiereinrichtung vorgenommen werden. Der Zufallsgenerator 21 weist einen nach oben hin begrenzten Wertevorrat auf. Als Zufallsgenerator kann auch ein Rauschgenerator dienen, bei dessen Verwendung der Analog-Digital-Wandler 20 entfallen kann. Als Ausgangssignal u4 des dritten Multiplizierers 19 erscheint nun ein Signal, das die Zeitspanne zwischen den einzelnen Messzeitpunkten bestimmt. Hierbei wird die Hilfsgrösse h noch in stochastischer Weise moduliert, so dass eine exakte Voraussage für die Messzeitpunkte der Strömungsgeschwindigkeitsmesseinrichtung 6 nicht mehr möglich ist. Durch den Einsatz des Zufallsgenerators 21 wird somit eine hohe Manipulationssicherheit gegen Fälschungsversuche am Messergebnis des Wärmemengenzählers erreicht.

Für den Fall, dass keine derartig hohen Anforderungen an die Manipulationssicherheit gestellt werden, kann der Zufallsgenerator 21, der Digital-Analog-Wandler 20 sowie der Multiplizierer 19 entfallen. Die Hilfsgrösse h wird in diesem Fall direkt als Signal u4 dem einen Eingang des zweiten Multiplizierers 8 und zusätzlich dem Eingang des weiteren Quantisierers 22 zugeführt. Für das in der Figur dargestellte Ausführungsbeispiel wird jedoch das Ausgangssignal des dritten Multiplizierers 19 als Signal u4 genutzt. In dem dem dritten Multiplizierer 19 nachgeschalteten Quantisierer 22 wird das die Zeitspanne zwischen den einzelnen Messzeitpunkten bestimmende Ausgangssignal u4 in einen Impulszug u7 gewandelt, dessen Frequenz proportional zum Wert des Signals u4 ist. Die Impulse des Impulszuges u7 sind über die Leitung 23 dem Triggereingang T der Strömungsgeschwindigkeitsmesseinrichtung 6 zugeführt. Durch jeden Impuls des Impulszuges u7 wird ein Messzeitpunkt festgelegt, in dem die Strömungsgeschwindigkeitsmesseinrichtung 6 für eine jeweils konstante Zeitspanne aktiviert ist. Als Ergebnis jedes solchen Messvorgangs entsteht am Ausgang der Strömungsgeschwindigkeitsmesseinrichtung 6 das der Strömungsgeschwindigkeit Φ proportionale Signal u2.

Der weitere Quantisierer 22 ist ebenso aufgebaut, wie der bereits erwähnte Quantisierer 9. Er enthält eingangsseitig einen Integrator 24 sowie eine nachgeschaltete Grenzwertstufe 25, deren Ausgang den Ausgang des Quantisierers 22 bildet. Das Ausgangssignal der Grenzwertstufe 25 ist dem Rücksetzeingang R des Integrators 24 zugeführt.

Als die die Messzeitpunkte festlegende Hilfsgrösse ist – abweichend von dem in der Figur dargestellten Ausführungsbeispiel – eine Reihe weiterer Grössen denkbar. So kann beispielsweise zur Bildung dieser Hilfsgrösse h anstelle der Summiereinrichtung 13 ein Differenzierglied dienen, dem eingangsseitig der Spannungsabfall am temperaturempfindlichen Widerstand 1 für die Bestimmung der Vorlauftemperatur zugeführt ist. Alternativ kann beispielsweise die Hilfsgrösse h auch aus dem Stellsignal einer in Abhängigkeit von der Wärmeanforderung geregelten Umwälzpumpe abgeleitet werden. Wesentlich hierbei ist lediglich, dass bei einer Änderung eines die aktuelle Wärmeleistung bestimmenden Parameters die Häufigkeit der Messzeitpunkte erhöht wird.

**Patentansprüche**

1. Wärmemengenzähler zur Messung der von einem fluidischen Medium in mindestens einem Wärmetauscher abgegebenen Wärmemenge, mit einer flügelradlosen Strömungsgeschwindigkeitsmesseinrichtung (6) sowie Temperatursensoren (1, 2) zur Erfassung der Vorlauf-Rücklauf-Temperaturdifferenz $\Delta\vartheta$ aus Vorlauftemperatur $\vartheta_V$ und Rücklauftemperatur $\vartheta_R$, mit einem Multiplizierer (7) zur Bildung des Produktes aus Strömungsgeschwindigkeit Φ und Vorlauf-Rücklauf-Temperaturdifferenz $\Delta\vartheta$, mit einem Quantisierer (9) zur Bildung eines Impulszuges u6 mit einer dem Produkt proportionalen Frequenz sowie mit einer nachgeschalteten kumulierenden Zähleinrichtung (10) für die Impulse des Impulszuges u6, dadurch gekennzeichnet, dass die Strömungsgeschwindigkeitsmesseinrichtung (6) nur in bestimmten Messzeitpunkten aktiviert wird, wobei die Häufigkeit dieser Messzeitpunkte etwa proportional zu einer Hilfsgrösse (h) festgelegt ist, die ein Mass für die Erheblichkeit einer möglichen Änderung mindestens eines die Wärmeleistung bestimmenden Parameters ($\vartheta_V/2 + \vartheta_R/2$) auf das Messergebnis ist und dass ein zweiter Multiplizierer (8), der dem Quantisierer (9) vorgeschaltet ist, das Ausgangssignal (u3) des ersten Multiplizierers (7) mit einem dem zeitlichen Abstand ($T_n$) zwischen zwei Messzeitpunkten proportionalen Wert (h; u4) multipliziert.

2. Wärmemengenzähler nach Anspruch 1, dadurch gekennzeichnet, dass als Hilfsgrösse (h) ein etwa wärmeleistungsproportionales Signal ($\vartheta_V/2 + \vartheta_R/2$) dient.

3. Wärmemengenzähler nach Anspruch 2, dadurch gekennzeichnet, dass eine Summiereinrichtung (13) für die Ausgangssignale der dem Heizungsvorlauf und dem Heizungsrücklauf zugeordneten Temperatursensoren (1, 2) vorgesehen ist, deren Ausgangssignal als Hilfsgrösse (h) dient.

4. Wärmemengenzähler nach Anspruch 3, dadurch gekennzeichnet, dass das Ausgangssignal (h) der Summiereinrichtung (13) einerseits einem weiteren Quantisierer (22) zur Bildung eines Impulszuges (u7) mit einer der Grösse des Ausgangssignals (h) der Summiereinrichtung (13) proportionalen Frequenz und andererseits dem zweiten Eingang des zweiten Multiplizierers (8), dessen erster Eingang mit dem Ausgang des ersten Multiplizierers (7) verbunden ist, zugeführt ist, und dass der Impulszug (u7) einem Triggereingang (T) der Strömungsgeschwindigkeitsmesseinrichtung (6) zugeführt ist.

5. Wärmemengenzähler nach Anspruch 3, dadurch gekennzeichnet, dass der Summiereinrichtung (13) ein eine Verknüpfung bewirkendes Operationsglied (19) unmittelbar nachgeschaltet ist, dessen einem Eingang das Ausgangssignal (h) der Summiereinrichtung (13) und dessen anderem Eingang das Ausgangssignal eines Zufallsgenerators (21) zugeführt ist, wobei der Zufallsgenerator einen nach oben begrenzten Wertevorrat aufweist.

6. Wärmemengenzähler nach Anspruch 5, dadurch gekennzeichnet, dass als Operationsglied (19) ein dritter Multiplizierer dient.

7. Wärmemengenzähler nach Anspruch 5, dadurch gekennzeichnet, dass als Operationsglied (19) eine weitere Summiereinrichtung dient.

8. Wärmemengenzähler nach einem der Ansprüche 5 bis 7, dadurch gekennzeichnet, dass als Zufallsgenerator (21) ein Rauschgenerator dient.

9. Wärmemengenzähler nach einem der Ansprüche 1 bis 8, dadurch gekennzeichnet, dass jeder Quantisierer (9; 22) aus einem Integrator (11; 24) sowie einer nachgeschalteten Grenzwertstufe (12; 25) besteht, deren Ausgang den Ausgang des Quantisierers (9; 22) bildet, wobei das Ausgangssignal der Grenzwertstufe (12; 25) zur Zurücksetzung des Integrators (11; 24) genutzt ist.

**Claims**

1. A heat quantity counter for measuring the quantity of heat emitted by fluid medium in at least one heat exchanger, comprising a non-impeller driven flow rate measuring device (6), and temperature sensors (1, 2) which detect the difference $\Delta\vartheta$ of forwards-flow temperature $\vartheta_V$ and return-flow temperature $\vartheta_R$, comprising a multiplier (7) which forms the product of flow rate ($\Phi$) and forwards-flow/return-flow temperature difference ($\Delta\vartheta$), comprising a quantiser (9) which forms a pulse train u6 with a frequency-proportional product, and comprising a following cumulative counting device (10) for the pulses of the pulse train u6, characterised in that the flow rate measuring device (6) is activated only at specified measuring times, where the frequency of these measuring times is approximately proportional to an auxiliary value (h) which is a gauge of the importance of a possible change of at least one parameter $(\vartheta_V/2 + \vartheta_R/2)$, which determines the thermal output, in relation to the measurement result, and that a second multiplier (8), which precedes the quantiser (9), multiplies the output signal (u3) of the first multiplier (7) by a value (h; u4) proportional to the interval of time (Tn) between two measurement points.

2. A heat quantity counter as claimed in Claim 1, characterised in that a signal $(\vartheta_V/2 + \vartheta_R/2)$ approximately proportional to the thermal output serves as an auxiliary value (h).

3. A heat quantity counter as claimed in Claim 2, characterised in that an adder (13) is provided for the output signals of the temperature sensors (1, 2) assigned to the heating forwards-flow and the heating return-flow, the output signal of said adder serving as an auxiliary value (h).

4. A heat quantity counter as claimed in Claim 3, characterised in that the output signal (h) of the adder (13) is fed firstly to a further quantiser (22) which forms a pulse train (u7) having a frequency proportional to the value of the output signal (h) of the adder (13), and furthermore to the second input of the second multiplier (8), whose first input is connected to the output of the first multiplier (7), and that the pulse train (u7) is fed to a trigger input (T) of the flow rate measuring device (6).

5. A heat quantity counter as claimed in Claim 3, characterised in that the adder (13) is directly followed by an operational element (19) which effects a logic-linking, its first input being supplied with the output signal (h) of the adder (13) and its other input supplied with the output signal of a random generator (21), where the random generator has a supply of values with an upper limit.

6. A heat quantity counter as claimed in Claim 5, characterised in that a third multiplier serves as an operations element (19).

7. A heat quantity counter as claimed in Claim 5, characterised in that a further adder serves as an operations element (19).

8. A heat quantity counter as claimed in one of Claims 5 to 7, characterised in that a noise generator serves as a random generator (21).

9. A heat quantity counter as claimed in one of Claims 1 to 8, characterised in that each quantiser (9; 22) consists of an integrator (11; 24) followed by a limit value stage (12; 25), whose output forms the output of the quantiser (9; 22) and the output signal of the limit value stage (12; 25) is used to reset the integrator (11; 24).

**Revendications**

1. Compteur de quantités de chaleur servant à mesurer la quantité de chaleur délivrée par un fluide dans au moins un échangeur de chaleur, comportant un dispositif (6) de mesure de la vitesse d'écoulement sans moulinet ainsi que des capteurs de température (1, 2) servant à détecter la différence de température $\Delta\vartheta$ entre le circuit aller et le circuit retour à partir de la température $\vartheta_V$ dans le circuit aller et la températur $\vartheta_R$ dans le circuit retour, un multiplicateur (7) servant à former le produit de la vitesse d'écoulement $\Phi$ par la différence de température $\Delta\vartheta$ entre le circuit aller et le circuit retour, un quantificateur (9) servant à former un train d'impulsions (u6), possédant une fréquence proportionnelle au produit, ainsi qu'un dispositif de comptage cumulatif (10), branché en aval, pour les impulsions du train d'impulsions (u6), caractérisé par le fait que le dispositif (6) de mesure de la vitesse d'écoulement n'est activé qu'à des instants de mesure déterminés, auquel cas la fréquence de ces instants de mesure est déterminée comme étant approximativement proportionnelle à une grandeur auxiliaire (h) qui est une mesure de l'importance de l'action d'une modification possible d'au moins un paramètre $(\vartheta_V/2 + \vartheta_R/2)$ déterminant la puissance calorifique, sur le résultat de mesure et qu'un second multiplicateur (8), qui est branché en amont du quantificateur (9), multiplie le signal de sortie (u3) du premier multiplicateur (7) par une valeur (h; u4) proportionnelle à l'intervalle de temps $(T_n)$ entre deux instants de mesure.

2. Compteur de quantités de chaleur suivant la revendication 1, caractérisé par le fait qu'un signal $(\vartheta_V/2 + \vartheta_R/2)$, approximativement proportionnel à la puissance calorifique, est utilisé en tant que grandeur auxiliaire (h).

3. Compteur de quantités de chaleur suivant la revendication 2, caractérisé par le fait qu'il est prévu un additionneur (13) pour les signaux de sortie des capteurs de température (1, 2) associés au circuit aller de chauffage et au circuit retour de chauffage et dont le signal de sortie est utilisé comme grandeur auxiliaire (h).

4. Compteur de quantités de chaleur suivant la revendication 3, caractérisé par le fait que le signal de sortie (h) de l'additionneur (13) est envoyé d'une part à un autre quantificateur (22) pour la formation d'un train d'impulsions (u7) possédant une fréquence proportionnelle à la grandeur du signal de sortie (h) de l'additionneur (13), et d'autre part à la seconde entrée du second multiplicateur (8), dont la première entrée est reliée à la sortie du premier multiplicateur (7), et que le train d'impulsions (u7) est envoyé à une entrée de déclenchement (T) du dispositif (6) de mesure de la vitesse d'écoulement.

5. Compteur de quantités de chaleur suivant la revendication 3, caractérisé par le fait que directement en aval de l'additionneur (13) se trouve branché un circuit opérationnel (19) réalisant une combinaison logique et dont une entrée reçoit le signal de sortie (h) de l'additionneur (13) et dont l'autre entrée reçoit le signal de sortie d'un générateur de signaux aléatoires (21), qui comportent une réserve de valeurs limitées vers le haut.

6. Compteur de quantités de chaleur suivant la revendication 5, caractérisé par le fait qu'on utilise comme circuit opérationnel (19) un troisième multiplicateur.

7. Compteur de quantités de chaleur suivant la revendication 5, caractérisé par le fait qu'on utilise un autre additionneur comme circuit opérationnel (19).

8. Compteur de quantités de chaleur suivant l'une des revendications 5 à 7, caractérisé par le fait qu'on utilise comme générateur de signaux aléatoires (21) un générateur de bruits.

9. Compteur de quantités de chaleur suivant l'une des revendications 1 à 8, caractérisé par le fait que chaque quantificateur (9; 22) est constitué par un intégrateur (11; 24) et par un étage à valeur limite (12; 25) branché en aval et dont la sortie forme la sortie du quantificateur (9; 22), le signal de sortie de l'étage à valeur limite (12; 25) étant utilisé pour ramener à zéro l'intégrateur (11; 24).